# EUROPÄISCHE PATENTSCHRIFT

(11) **EP 3 084 321 B1**
(45) Veröffentlichungstag und Bekanntmachung des Hinweises auf die Patenterteilung: **03.03.2021**
(21) Anmeldenummer: 14809341.2
(22) Anmeldetag: 02.12.2014
(51) Int. Cl.: F25B 35/04, B01J 20/00, F28F 13/18, B01J 20/20, B01J 20/28, B01J 20/32, F28D 20/00

(54) **ADSORBERSTRUKTUR**
ADSORBER STRUCTURE
STRUCTURE D'ADSORPTION

(30) Priorität: 19.12.2013 DE 102013226732
(43) Veröffentlichungstag der Anmeldung: 26.10.2016
(73) Patentinhaber: MAHLE Behr GmbH & Co. KG, 70469 Stuttgart (DE)
(72) Erfinder: BURK, Roland, 70469 Stuttgart (DE); WOLFF, Thomas, 95213 Münchberg (DE)
(74) Vertreter: BRP Renaud & Partner mbB Rechtsanwälte Patentanwälte Steuerberater
(86) Internationale Anmeldenummer: PCT/EP2014/076260
(87) Internationale Veröffentlichungsnummer: WO 2015/090940

(56) Entgegenhaltungen:
- WO-A1-2013/001391
- DE-A1- 19 849 216
- DE-T2- 69 108 185
- US-B2- 8 539 781

## Beschreibung

Die vorliegende Erfindung betrifft eine Adsorberstruktur. Die Erfindung betrifft außerdem einen Adsorptionswärmetauscher mit einer solchen Adsorberstruktur sowie ein Verfahren zur Herstellung dieser Adsorberstruktur.

Thermisch angetriebene Sorptions-Wärmepumpen und -Kälteanlagen haben ein hohes Energieeinsparpotenzial, da als Antriebsenergie nicht Strom, sondern Wärme verwendet wird. Bei der Wärmepumpenanwendung wird zusätzlich zum Brennwert einer Wärmezelle auch ein Exergieanteil des Brennstoffs genutzt, um zusätzliche Umweltwärme auf das erforderliche Heiztemperaturniveau zu heben. Für Kälteanwendungen lässt sich kostengünstige Ab- oder Überschusswärme aus solarthermischen oder Kraft-Wärme-gekoppelten Anlagen nutzen, um die elektrischen Netze besonders in warmen Zeit- und Klimazonen mit hohem Kältebedarf zu entlasten. Besonders interessant sind dabei Adsorptionsanlagen, bei denen poröse Feststoffe zum Einsatz kommen und die keine schnell bewegten und damit störanfälligen Verschleißteile im Arbeitsmittelbereich besitzen.

Ziel bei den bekannten Adsorptions-Kälteanlagen ist es, möglichst viel sorptionsaktive Masse, das heißt beispielsweise Aktivkohle, pro Volumen unterzubringen. Dazu ist es erforderlich, möglichst dicke Schichten des adsorptiven Materials vorzusehen, die thermisch gut an eine Wärmeübertragungstruktur angebunden sind und eine hohe effektive Diffusionsgeschwindigkeit des Adsorptivdampfes aufweisen.

Zur Sicherstellung einer ausreichenden Attraktivität, müssen diese adsorptiven Strukturen besondere physikalische Merkmale aufweisen, wie z.B. eine hohe Wärmeleitfähigkeit und Mikroporosität. Das Adsorbens selbst muss für den Anwendungsfall abgestimmte optimale Sorptionsisothermen aufweisen.

Aus der DE 10 2006 008 786 A1 ist eine gattungsgemäße Adsorberstruktur für einen Wärmetauscher und eine Adsorptions-Wärmepumpe oder Adsorptions-Kältemaschine bekannt, die mindestens eine derartige Adsorberstruktur enthält. Die Adsorberstruktur umfasst einen offenporigen wärmeleitenden Festkörper und ein auf der inneren Oberfläche dieses Festkörpers angeordnetes Sorptionsmaterial für ein dampfförmiges Adsorptiv. Auf der Außenfläche des offenporigen Festkörpers ist zumindest in den Bereichen, in denen ein Kontakt mit einem Wärmeträgerfluid vorgesehen ist, ein fluiddichtes wärmeleitendes flächiges Element, bevorzugt eine fluiddichte Folie, angeordnet, wobei die Adsorberstruktur derart ausgebildet ist, dass der Wärmeaustausch zwischen dem offenporigen Festkörper und dem Wärmeträgerfluid über das fluiddichte Element erfolgen kann.

Aus der WO 2007073849 A2 ist eine Sorptionswärmeübertragerwand bekannt, die eine Tragstruktur sowie Makro-, Meso- und Mikrostrukturen für den Wärme- und Stofftransport aufweist.

Aus der WO 2007/068481 A1 ist eine Adsorptionswärmepumpe bekannt, die aus mehreren Hohlelementen mit jeweils einem Adsorptions-Desorptionsbereich und einem Verdampfungs-Kondensations-Bereich bzw. Phasenwechselbereich bestehen. Die Hohlelemente werden an jedem der Bereiche mit einem wärmetransportierenden Fluid beströmt, wobei die Verschaltung der Hohlelemente bezüglich der Fluidbeströmung mittels Ventilanordnungen zyklisch verändert wird. Die Funktion und die Leistungsdichte einer derartigen Anlage wird einerseits von den Gleichgewichts- und Stoffdaten des eingesetzten Stoffpaars bestehend aus einem Adsorbens und einem Adsorptiv und andererseits von der Kinetik der Sorptionsprozesse des Adsorptivs an das Adsorbens entscheidend beeinflusst.

Aus der DE 10 2009 015 102 A1 ist ebenfalls eine gattungsgemäße Adsorberstruktur (Arbeitsmittelspeicher) bekannt, die aus einer Vielzahl von Blechschichten besteht, auf denen ein Sorptionsmittel wärmeleitend angeordnet ist.

In der DE 10 2005 058 624 A1 ist ein Verfahren zur Herstellung eines Adsorberwärmetauschers beschrieben, bei dem mehr oder weniger eine Monolage an Adsorberpartikeln auf die Oberfläche einer Wärmetauscherstruktur aufgeklebt wird. Der Nachteil ist hierbei die Monolage, d.h. man bekommt keine sehr großen Adsorbermengen pro Volumen unter. Die Anlagen, die auf dieser Technik basieren, benötigen daher viel Platz.

Aus der DE 10 2008 050 926 A1 ist ein Adsorberelement bekannt, bestehend aus einem Träger, auf den mit Hilfe eines kolloidalen Bindemittels Adsorberpartikel aufgeklebt werden, wobei diese Adsorberschicht auch Fasern umfasst. Die Fasern dienen dazu, der bis zu 500µm dicken Adsorberschicht eine bestimmte Elastizität zu verleihen und beim Trocknen Schwindungsrisse zu vermeiden.

Das Dokument US 8 539 781 B2, welches den nächstliegenden Stand der Technik darstellt, zeigt eine Adsorberstruktur, in die durch pyrolytische Entfernung von Fasern gerichtete Poren für einen verbesserten Stofftransport eingebracht werden. Ebenso zeigt diese Dokument die Einbringung von anorganischen Fasern in eine Absorbermatrix für einen verbesserten richtungsspezifischen Wärmetransport.

Nachteilig an den bekannten Adsorberstrukturen ist die aufwändige und damit teure Ausführung, bei der die Adsorberstruktur auf einer metallischen Tragstruktur oder einer Wärmeübertragerwand z. B. durch Löten oder Kleben gut wärmeleitend angebunden sein muss. Nachteilig dabei ist außerdem, dass die Anforderung der hohen Wärmeleitfähigkeit der Makro-Tragstrukturen nur mit Kupfer- oder Aluminiumlegierungen zu erreichen ist, die mit dem angestrebten Arbeitsmittel Methanol nicht ausreichend kompatibel sind.

Wie eingangs bereits ausgeführt, ist ein Großteil der bestehenden Technologien nur für dünne Adsorberschichten/-strukturen geeignet bzw. für diese ausgelegt, die bei der thermischen Zyklierung zwangsläufig zu einem ungünstigen Verhältnis von latenter zu sensibler Leistung führt. Für möglichst kompakte Anlagen ist zudem eine hohe Adsorbermasse pro Bauvolumen notwendig, was dicke Adsorberschichten mit ausreichend hoher Wärmeleitfähigkeit erfordert. Hierdurch entsteht ein Zielkonflikt mit der Kinetik des Desorptions- und Adsorptionsprozesses. Denn je dicker die Adsorberschicht ist, desto größer sind die Verluste des Wärme- und Stofftransportes in die Strukturen hinein, da die treibenden Gradienten über einen längeren Weg aufzubauen sind.

Die vorliegende Erfindung beschäftigt sich daher mit dem Problem, eine Adsorberstruktur und einen damit ausgestatteten Adsorptionswärmeübertrager vorzuschlagen, die den Zielkonflikt zwischen großer angebundener Adsorbermasse und hoher Sorptionskinetik ohne Verwendung metallischer Hilfsstrukturen zur Oberflächenvergrößerung löst. Weiterhin sollte die Lösung mit bekannten großserientauglichen und kostengünstigen Prozessen herstellbar sein.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine Adsorberstruktur mit gerichteten Transportstrukturen für den Wärmetransport und den Adsorptivdampftransport auszustatten, wobei die Transportstrukturen im Wesentlichen in Gradientenrichtung ausgerichtet sind. Die erfindungsgemäße Adsorberstruktur besitzt somit weitgehend gerichtete, insbesondere lineare, Transportstrukturen, wobei sich angrenzend an die Transportstrukturen in Form von Wärmeleitfasern und/oder Mikrodampfkanälen geringer Tortuosität die eigentliche Adsorbermasse befindet, die den Adsorptivdampf über die angrenzenden Dampf- und/oder Mikrodampfkanäle austauscht und die Sorptionswärme mit der ebenfalls benachbarten Wärmeleitfaser austauscht. Die Transportstrukturen sind durch organische und anorganische Fasern bzw. von ihnen nach einem Pyrolyseprozess hinterlassenen Dampfkanälen gebildet. Bei diesem bionischen Konzept ist jedes Adsorbenspartikel des Adsorbermaterials nach dem biologischen Beispiel einer Lunge auf äußerst kurzem Wege einerseits an mindestens einen (Mikro-)Dampfkanal und andererseits an eine Wärmeleitfaser angebunden. Da jedes aktive Element (Adsorbenspartikel entsprechend einer Alveole) einen direkten Zugang zu beiden Transportsystemen besitzt, wird eine vergleichsweise hohe volumenspezifische Sorptionskinetik erzielt.

Unter Sorptionskinetik wird dabei die Geschwindigkeit der teils seriell und der teils parallel ablaufenden Wärme- und Stofftransportprozesse bei gegebenen treibenden Temperatur- bzw. Druckgradienten bezeichnet. Die erfindungsgemäße Adsorberstruktur kann darüber hinaus auch deutlich dicker als bisherige aus dem Stand der Technik bekannte Adsorberschichten ausgebildet werden, da die Dampfkanäle und die die Adsorberstruktur wenigstens teilweise in Gradientenrichtung durchdringenden Wärmeleitfasern auch innen in der Adsorberstruktur eine hohe Sorptionskinetik gewährleisten. Die Wärmeleitfasern bestehen dabei aus einem anderen Material, als die Fasern, die durch Pyrolyse die Dampfkanäle hinterlassen, so dass generell zwei Arten von Fasern zur Herstellung der Adsorberstruktur verwendet werden.

Gemäß der erfindungsgemäßen Lösung sind die Fasern als Wärmeleitfasern ausgebildet und mit einer ersten Oberfläche der Adsorberstruktur verbunden, wogegen die Dampfkanäle zur ersten Oberfläche hin geschlossen und zu einer gegenüberliegenden zweiten Oberfläche zum Dampfraum hin wenigstens teilweise offen ausgebildet sind. Hierdurch ist es somit möglich, jedes Adsorbenspartikel auf äußerst kurzem, das heißt verlustarmem, Weg einerseits über mindestens einen (Mikro-)Dampfkanal an den Adsorptivdruck des Freiraums bzw. der Umgebung und andererseits über eine Wärmeleitfaser an beispielsweise eine Wärmeübertragungsfläche, insbesondere eine Wärmeübertragerwand anzubinden. Die Zwischenräume zwischen den einzelnen Fasern bzw. den von diesen hinterlassenen Dampfkanälen sind dabei mit Adsorbermaterial, beispielsweise Aktivkohle, aufgefüllt, wodurch die Adsorberstruktur eine hohe Masse an Adsorbermaterial bezogen auf das Volumen und damit eine hohe Adsorberkapazität und -leistung besitzt.

Zweckmäßig verlaufen die Fasern bzw. die von ihnen nach einem Pyrolyseprozess hinterlassenen Dampfkanäle im Wesentlichen parallel zueinander, wobei diese entweder linear oder aber auch leicht mäanderförmig ausgebildet sein können. Durch die Parallelität wird ein stets gleich großer Abstand zwischen einem Dampfkanal und einer benachbarten Wärmeleitfaser erreicht, wodurch jedes Adsorbenspartikel einerseits nah an einem Dampfkanal und andererseits nah an einer Wärmeleitfaser angeordnet ist. Je geringer die Abstände zwischen den einzelnen Dampfkanälen bzw. Wärmeleitfasern sind, umso höher ist die Sorptionskinetik.

Zweckmäßig weist die Adsorberstruktur eine erste Schicht mit einem Pulver-/Bindergemisch mit wärmeleitenden Partikeln, vorzugsweise aus expandiertem Graphit, Graphitpulver, BN, SiC oder AIN, auf, sowie eine sich daran anschließende zweite Schicht mit hochporösem Adsorbenspulver und einem Binder, z.B. auf der Basis von Alumosilikaten. Die erste Schicht ist dabei mit der ersten Oberfläche der Adsorberstruktur, das heißt hin zu einem Wärmeübertrager, verbunden, wogegen die zweite Schicht mit der zweiten Oberfläche offen zu einem Dampfraum oder einem Dampf-Strömungskanal ausgerichtet ist. Die erste Schicht soll dabei einen verbesserten thermischen Kontakt zu einer wärmeübertragenden Fläche bewirken, weshalb das in die Faserzwischenräume eingebrachte Pulver-/Bindergemisch einen hohen Anteil an wärmeleitenden Partikeln, insbesondere > 30 M.-%, besitzt. Hierdurch können die Faserenden der wärmeleitenden Faseranteile thermisch besser an die Wärmeübertragungsfläche angebunden und dadurch die Sorptionskinetik gesteigert werden.

Die Erfindung beruht weiter auf dem allgemeinen Gedanken, ein Verfahren zur Herstellung einer zuvor beschriebenen Adsorberstruktur anzugeben, bei dem Kurzschnittfasern (Stapelfasern = chopped fibers) in weitgehend senkrechter Richtung zur thermischen Anbindungsfläche in eine Adsorberstruktur eingebettet werden. Es wird dabei vorgeschlagen, zur Herstellung der Adsorberstruktur Teilprozesse zu verwenden und zu kombinieren, die sich bereits bei anderen Anwendungen bewährt haben, um Fasern innerhalb eines Compounds bzw. Composits eine Vorzugsausrichtung zu geben.

In einem ersten alternativ einsetzbaren Verfahren werden Fasern oder ein Fasergemisch aus einem wärmeleitenden und/oder pyrolysierbaren Material durch elektrostatisches Beflocken auf eine Klebefläche aufgebracht. Anschließend werden die zwischen den einzelnen Fasern liegenden Zwischenräume mit beschriebenen Mischungen aus Wärmeleitpartikeln, Adsorbens- und Binderpartikel und optional weiteren Zusatzstoffen aufgefüllt, optional verdichtet und getrocknet, wonach abschließend die Adsorberstruktur gesintert und dabei die organischen Faseranteile pyrolysiert werden, um die für den Adsorptivdampftransport erforderlichen Dampfkanäle zu schaffen.

Zum Einbringen von Mischungen von Adsorbens- und Binderpartikel in die Faserzwischenräume des hergestellten "Rasens" kommen Vibrations-, Blas-, Bürst-und/oder Schlämmverfahren zum Einsatz, wobei das Adsorbens-/Bindergemisch nass oder trocken verarbeitet werden kann.

In einem zweiten alternativen Verfahren werden Kurzschnitt-Fasern einheitlicher Länge (Stapelfasern) oder gemahlene Fasern (Fasern mit uneinheitlicher Länge) zusammen mit dem Adsorbenspulver und einem Binder sowie optionalen weiteren Hilfsstoffen in einem definierten Massenverhältnis compoundiert und nach dem Stand der Technik einem Extruder zugeführt. Durch Nutzung von Scher- und Dehneffekten auf dem Zuführungsweg zu einem Extrusionsmundstück können die Fasern entsprechend bekannten Techniken aus der Spritzguss- und Extrusionstechnik in Extrusionsrichtung ausgerichtet werden. Scherströmungen können durch Zwischengitter und Dehnungen des Extrudates können durch konische Zuführgeometrien zum Extrusionsmundstück realisiert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, sofern die resultierende Ausführungsform zumindest alle Mekrmale eines der anhängenden unabhängigen Ansprüche umfasst.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Schnittdarstellung durch eine erfindungsgemäße Adsorberstruktur mit Detaildarstellungen im Bereich einer ersten und zweiten Oberfläche,
- Fig. 2: eine Darstellung wie in Fig. 1, jedoch bei schräg zur jeweiligen Oberfläche verlaufenden Transportstrukturen infolge einer scherenden Verdichtung,
- Fig. 3: eine Darstellung wie in Fig. 2, jedoch mit mäandrierenden Transportstrukturen infolge einer senkrechten Verdichtung,
- Fig. 4: eine Darstellung wie in Fig. 3, jedoch mit einer zweischichtigen Adsorberstruktur,
- Fig. 5: eine mittels Extrusionsverfahren hergestellte erfindungsgemäße Adsorberstruktur,
- Fig. 6: eine mittels Extrusionsverfahren hergestellte erfindungsgemäße Adsorberstruktur mit extrudierten Dampfkanälen.

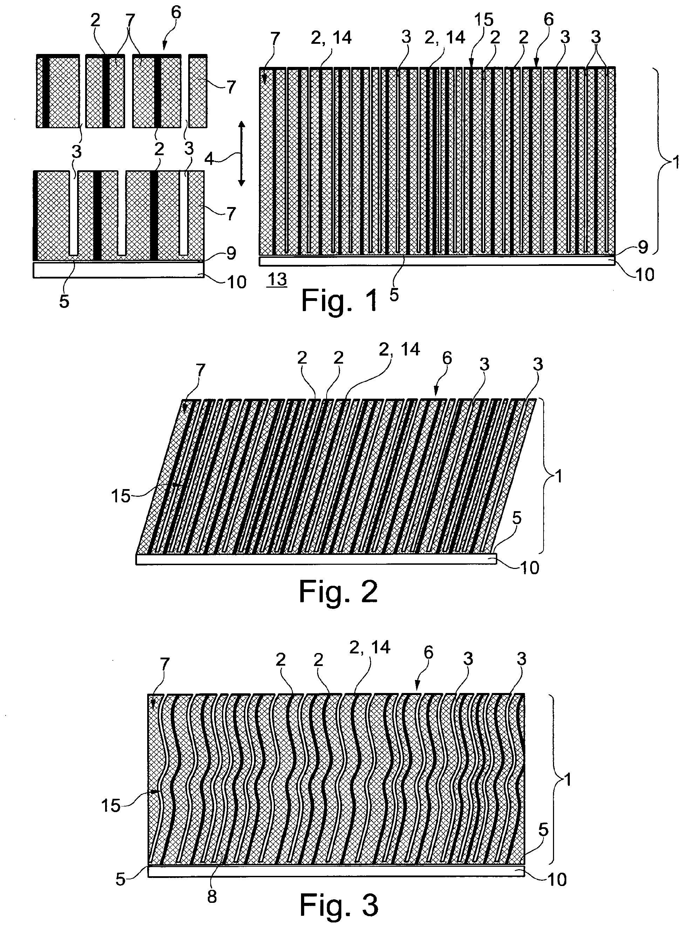

Entsprechend den Fig. 1 bis 4 weist eine erfindungsgemäße Adsorberstruktur 1 gerichtete Transportstrukturen 15 für den Wärmetransport und den Adsorptivdampftransport auf, wobei die Transportstrukturen 15 durch organische und/oder anorganische Fasern 2 bzw. von ihnen nach einem Pyrolyseprozess hinterlassen Dampfkanälen 3 gebildet und im Wesentlichen in Gradientenrichtung 4 ausgerichtet sind. Die Fasern 2 sind dabei als Wärmeleitfasern ausgebildet und mit einer ersten Oberfläche 5 der Adsorberstruktur 1 verbunden, wogegen die Dampfkanäle 3 zur ersten Oberfläche 5 hin geschlossen und zu einer gegenüberliegenden zweiten Oberfläche 6 zum Adsorptiv-Dampfraum hin wenigstens teilweise offen ausgebildet sind, wie dies insbesondere den Detaildarstellung aus Fig. 1 zu entnehmen ist. Zwischen den einzelnen Fasern 2 bzw. Dampfkanälen 3 ist ein Adsorbermaterial 7, beispielsweise Aktivkohle, angeordnet. Betrachtet man dabei die Fig. 1, so kann man erkennen, dass die Fasern 2 und mit diesen auch die durch den Pyrolyseprozess entstandenen Dampfkanäle 3 im Wesentlichen senkrecht auf die erste Oberfläche 5 treffen. Wie bei den Adsorberstrukturen 1 gemäß den Fig. 2 bis 5, treffen die Fasern 2 bzw. die Dampfkanäle 3 schräg auf die erste Oberfläche 5 und auch schräg auf die gegenüberliegende zweite Oberfläche 6 auf. Die Fasern 2 können somit aus nicht pyrolysierbaren Wärmeleitfasern und pyrolysierbaren organischen Fasern bestehen, die sich beim Pyrolyseprozess größtenteils auflösen und hierdurch die Dampfkanäle 3 hinterlassen. Durch eine vergleichsweise dichte Anordnung der Fasern 2 und damit auch der Dampfkanäle 3 kann eine hohe Sorptionskinetik, das heißt ein verlustarmer Wärme- und Dampftransport erreicht werden.

Die Schrägstellung der Fasern 2 bzw. der Dampfkanäle 3 kann sich dabei als ungewollter aber tolerierbarer Nebeneffekt einer scherenden verdichtenden Stauchung der Adsorberstruktur 1 ergeben, um die Dichte der Adsorberstruktur und deren mechanische Festigkeit zu erhöhen. Vorzugsweise sind die einzelnen Fasern 2 bzw. die hierdurch entstandenen Dampfkanäle 3 im Wesentlichen parallel zueinander ausgerichtet, so dass bei geeigneter Wahl der Faser-Massenanteile im Compound jedes Adsorbenspartikel einerseits möglichst nahe an einer wärmeleitenden Faser 2 und andererseits möglichst nahe an einem Dampfkanal 3 angeordnet ist.

Generell ist die Adsorberstruktur 1 direkt oder indirekt über eine Klebeschicht 9 mit einem Wärmetauscherelement 10, insbesondere mit einer Wand eines Adsorptionswärmeübertragers 13, beispielsweise einer Sorptionswärmepumpe oder einer Sorptionskälteanlage verbunden. Anstelle der Klebeschicht 9 kann aber auch eine rein kraftschlüssige thermische Ankoppelung der Adsorberstruktur an die Wand eines Adsorptionswärmeübertragers 13 in Frage kommen.

Zur Herstellung der gemäß den Fig. 1 bis 4 gezeigten Adsorberstruktur 1 können beispielsweise Stapelfasern aus einem gut wärmeleitenden und/oder pyrolysierbaren Material durch elektrostatisches Beflocken auf eine klebende Oberfläche, hier also auf die Klebeschicht 9, aufgebracht werden, insbesondere senkrecht, was beispielsweise preiswert durch einen elektrostatischen Durchlaufbeflocker erfolgen kann. Es sei darauf hingewiesen, dass die primäre Klebeschicht zur Anwendung des Beflockungsverfahrens nicht zwingend mit der Klebeschicht zur Applikation der Struktur an die Wärmeübertragerwand 13 identisch sein muss. Sie kann z. B. auch durch eine Selbstklebefolie oder dergleichen ausgebildet sein, die nach einem der weiteren beschriebenen Verfahrensschritte wieder abgezogen und verworfen wird.

In einem zweiten, dem Beflockungsprozess folgenden Prozessschritt werden die Zwischenräume des erzeugten "Rasens" aus senkrecht stehenden Fasern 2 mit einem Gemisch aus Adsorbens- und Binderpartikel aufgefüllt. Dazu kommen eine Reihe bekannter Applikationsverfahren in Frage, um eine möglichst hohe Rohdichte der dadurch zu erzeugenden Composits der Adsorberstruktur 1 zu erreichen. Genannt seien hier Vibrations-, Blas-, Bürst- und/oder Schlämmverfahren einer trockenen oder wässrigen Mischung. Eine weitere Steigerung der Dichte, des thermischen Kontaktes und/oder der Festigkeit des Verbundes kann durch unterschiedliche Verdichtungsprozesse, beispielsweise durch schräges oder senkrechtes Pressen erreicht werden, wodurch insbesondere die gemäß den Fig. 2 bis 4 schematisch dargestellten Adsorberstrukturen 1 hergestellt werden können.

Gemäß der Fig. 2 kann die thermische Verbindung zwischen Adsorberstruktur 1 und Wärmeübertragerwand 13 auch durch einen kraftschlüssigen Kontakt hergestellt sein, wogegen die Adsorberstrukturen 1 gemäß den Fig. 1 sowie 3 und 4 eine gut wärmeleitende und/oder dünne Klebeschicht 9 aufweisen.

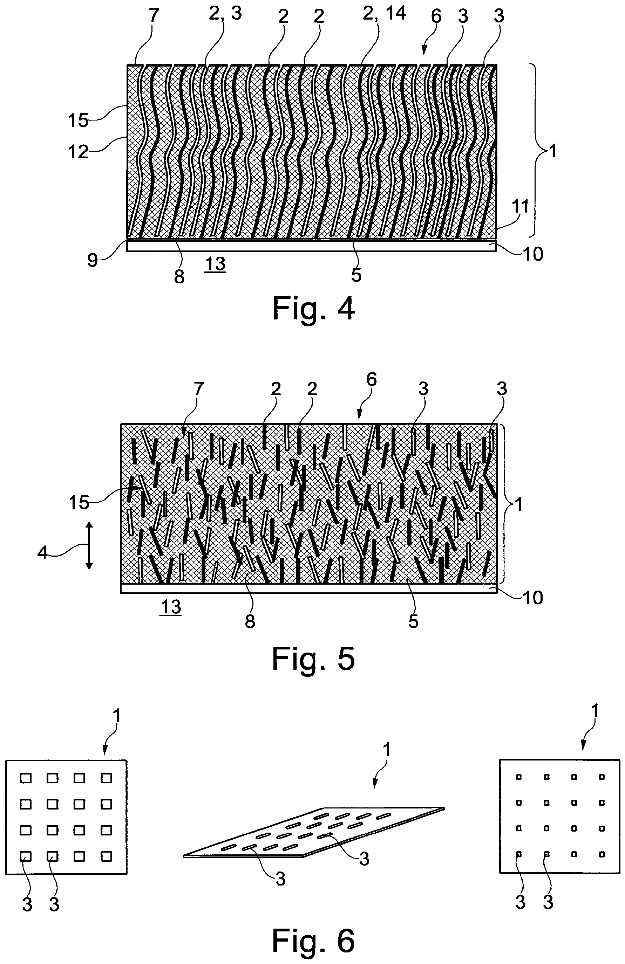

Betrachtet man die Adsorberstruktur 1 gemäß der Fig. 4, so kann man erkennen, dass diese in zwei Schichten 11 und 12 unterteilt ist. Die erste Schicht 11 enthält einen höheren oder sehr hohen Anteil an wärmeleitenden Partikeln 8, vorzugsweise aus expandiertem Graphit oder Graphitpulver, BN, SiC, oder AIN. Ein hoher Anteil kann hierbei > 30 M.-% bedeuten. Die zweite Schicht 12 enthält mit hohem Anteil hochporöses Adsorbenspulver und einen Binder, z.B. auf Basis von Alumosilikaten. Im untersten Bereich der Adsorberstruktur 1, die den thermischen Kontakt zur wärmeübertragenden Oberfläche 5 herstellt, ist das in die Faserzwischenräume einzubringende Pulvergemisch somit mit einem erhöhten Anteil an gut wärmeleitenden Partikeln 8 ausgestattet, um den Wärmekontakt zwischen den Wärmeleitfasern 2 und der Oberfläche 5, das heißt der Kontaktfläche zu einer späteren Wand des Wärmetauscherelements 10 zu verbessern. Die darüber liegenden Faserzwischenräume sind mit bevorzugt hohen Anteilen hoch porösem Adsorbenspulver und einem Binder ausgestattet, um eine hohe Adsorptionskapazität zu erhalten. Hohe Anteile von Adsorbenspulver bedeutet Massenanteile größer 50%, bevorzugt größer 75%. Zur Verbesserung der Verarbeitbarkeit kann die Mischung noch weitere Hilfsstoffe enthalten. Durch den erhöhten Anteil an wärmeleitenden Hilfsstoffen, das heißt an wärmeleitenden Partikeln 8 in der ersten Schicht 11, ist eine größere Kontaktfläche und eine deutlich verbesserte Wärmeanbindung der Fasern 2 an die Wand 10 möglich. Die trockene oder wässrige zweischichtige Verbundmasse der Adsorberstruktur 1 kann durch verdichten, schneiden, trocknen, gegebenenfalls abziehen der Klebeschicht 9, und sintern zu fertigen Adsorptionskörpern weiter verarbeitet werden, die durch einen finalen Prozess wärmeleitend in bekannter Weise durch Kraft- oder Stoffschluss an das Wärmetauscherelement 10 angebunden werden. Da sämtliche Prozessschritte in einer Durchlaufanlage automatisiert endlos in der Ebene der Kontaktierungsfläche erfolgen können, lassen sich äußerst geringe Fertigungskosten erzielen.

Die Fig. 4 zeigt eine weitere Ausführungsvariante der Adsorberstruktur 1, bei welcher Fasern 2 verwendet werden, die deutlich kürzer sind als die Dicke der Adsorberstruktur 1. Diese Fasern können auch als Stapelfasern einheitlicher Länge aber auch als sogenannte gemahlene Fasern mit einer gewissen Längenverteilung vorliegen. Durch einen Extrusionsprozess in Dickenrichtung, das heißt in Gradientenrichtung 4, werden diese Fasern 2 nach den Erfahrungen zur Herstellung von Faser-Verbund-Werkstoffen durch Ausnutzung von Scher- und Dehnkräften durch Beschleunigung des Extrudates in einem konischen Mundstück weitgehend in dieser Richtung ausgerichtet. Hierbei kann der Ausrichteffekt durch Unterteilung des Außenquerschnitts durch kleinere konische Austrittsquerschnitte und Vorschaltung von Schergittern und dergleichen noch verstärkt werden. Zur Erzeugung einer thermischen Kontaktfähigkeit muss eine derart hergestellte Adsorberstruktur 1 senkrecht zur Extrusionsrichtung, das heißt senkrecht zur Gradientenrichtung 4, in Scheiben geschnitten werden. Bei Einstellung einer pastösen oder thixotropen Masse ist dies problemlos z. B. mittels eines Schneidedrahtes möglich. Die eingebrachten Fasern 2 können hinsichtlich Zusammensetzung, Werkstoff, Masseanteile und Geometrie so gewählt werden, dass sich im gesinterten Endzustand eine optimal abgestimmte Kinetik des Wärme- und Stofftransportes einstellt.

Als Fasern 2, welche im Nachgang durch Pyrolyse bzw. Sinterung die Dampfkanäle 3 hinterlassen, eignen sich insbesondere polymerbasierte Fasern aus Polyamid, Polyester oder Polyethylen. Besonders gut pyrolysierbar sind Polymere wie Polystyrol und SAN, Polyamide (PA) wie PA 66, Polycarbonat und Polyestercarbonat, aromatische Polyester (Polyarylate), Polyimide (PI) wie Polyätherimid (PEI) oder modifiziertes Polymethacrylimid (Poly-(N-Methylmethacrylimid), PMMI), Polyoxymethylen (POM) und Polyterephthalate (PETP, PBTP) sowie Copolymere der genannten Polymere sowie Polyethylen, Polypropylen und Phenolharze. Für die wärmeleitenden Fasern 2 kommen vorzugsweise PAN- oder Pech-basierte Carbonfasern zum Einsatz, aber auch gut wärmeleitende Metall- oder Keramikfasern und Whiskers kommen In Frage.

Eine weitere auf dem Extrusionsprozess basierte Variante des Herstellungsverfahrens besteht darin, ein Gemisch zu extrudieren, welches die Wärmeleitfasern 2, das Adsorbermaterial 7 sowie den Binder sowie optional weitere Hilfsstoffe enthält und bei dem durch den Extrusionsprozess die Transportkanäle, das heißt die Dampfkanäle 3 durch das Werkzeug erzeugt werden. Die durch den Extrusionsprozess erzeugten Dampfkanäle 3 können entsprechend den Fig. 6b und 6c weiterhin im Querschnitt reduziert werden, indem der noch pastös knet- und formbare Körper der Adsorberstruktur 1 definiert vor oder nach dem Ablängen auf eine definierte Endgeometrie verformt und/oder zusammengepresst wird. Fig. 6a zeigt die noch unverformten Dampfkanäle 3. Beispielsweise kann eine Kanalstruktur bzw. Transportstruktur 15 erzeugt werden, die durch Zusammenpressen oder plastisehe Umformung einer Wabenstruktur mit quadratischen Kanälen 3 entsteht, die eine Kanalbreite von 1,17 mm und eine Wandstärke von 330 µm aufweist, was einer Zelldichte von 300 Zellen/inch² entspricht. Je nach der Richtung der nachträglichen Umformung kann eine deutliche Verengung der Dampfkanäle 3 auf ein optimales Maß bewirkt werden (Fig. 6, c). Die Dampfkanäle 3 können dabei auch rautenförmig verformt werden. Durch diese Maßnahmen kann eine optimale Kombination von hoher Dampfdiffusivität und hoher volumenspezifischer Adsorbensmasse eingestellt werden.

Mit der erfindungsgemäßen Adsorberstruktur 1 mit Fasern 2 bzw. durch Pyrolyse daraus entstandenen Dampfkanäle 3 kann die Sorptionskinetik um Faktoren gesteigert werden. Dadurch kann bei gleichbleibenden treibenden Temperatur- und Druckdifferenzen die Zykluszeit entsprechend verkürzt werden, wodurch die Leistungsdichte der Adsorberstruktur 1 sowie der Anlage erhöht und damit die Baugröße und die Systemkosten gesenkt werden. Gleichzeitig oder alternativ können die treibenden Differenzen bei gleicher Zykluszeit reduziert und damit die Leistungszahl (COP) der Anlage deutlich gesteigert werden.

Eine Verkürzung der Zykluszeit und dadurch gesteigerte Leistungsdichte von Sorptionsmodulen ermöglicht eine Erweiterung des potentiellen Anwendungsspektrums auch in den automobilen Bereich hinein mit seinen sehr restriktiven Bauraumanforderungen. Durch die höhere Leistungsdichte wird auch der Verbrauch wertvoller Ressourcen wie beispielsweise Adsorbermaterial 7, Stahl, Edelstahl, reduziert.

## Patentansprüche

1. Adsorberstruktur (1) für einen Adsorptionswärmetauscher (13), die beinhaltet,
- dass die Adsorberstruktur (1) gerichtete Transportstrukturen (15) für einen Wärmetransport und einen Adsorptivdampftransport aufweist, die im Wesentlichen in Gradientenrichtung (4) ausgerichtet sind,
- dass die Transportstrukturen (15) durch organische und anorganische Fasern (2) gebildet werden,
- dass Dampfkanäle (3), insbesondere Mikro-Dampfkanäle (3), für einen Stofftransport vorhanden sind, welche die organischen Fasern (2) nach einem Pyrolyseprozess hinterlassen haben, und
- dass die anorganischen Fasern (2) als Wärmeleitfasern (14) ausgebildet und mit einer ersten Oberfläche (5) der Adsorberstruktur (1) verbunden sind, wogegen die Dampfkanäle (3) zur ersten Oberfläche (5) hin geschlossen und zu einer gegenüberliegenden zweiten Oberfläche (6) zur Umgebung hin weitgehend offen ausgebildet sind.

2. Adsorberstruktur nach Anspruch 1, die beinhaltet, dass die Wärmeleitfasern (14) aus PAN- oder Pech-basierten Carbonfasern, Metallfasern, anorganischen Fasern oder Whiskers bestehen.

3. Adsorberstruktur nach Anspruch 1 oder 2, die beinhaltet, dass zwischen den Fasern (2) und den Dampfkanälen (3) ein Adsorbermaterial (7), insbesondere Aktivkohle, angeordnet ist.

4. Adsorberstruktur nach einem der Ansprüche 1 bis 3,
die beinhaltet, dass die Fasern (2) im Wesentlichen senkrecht auf die erste Oberfläche (5) treffen.

5. Adsorberstruktur nach einem der vorhergehenden Ansprüche,
die beinhaltet, dass die Fasern (2) bzw. die von ihnen nach einem Pyrolyseprozess hinterlassenen Dampfkanäle (3) weitgehend parallel zueinander verlaufen.

6. Adsorberstruktur nach einem der vorhergehenden Ansprüche,
die beinhaltet, dass die Fasern (2) bzw.die von ihnen nach einem Pyrolyseprozess hinterlassenen Dampfkanäle (3) linear oder mäanderförmig verlaufen.

7. Adsorberstruktur nach einem der Ansprüche 1 bis 6,
die beinhaltet, dass die Adsorberstruktur (1) eine erste Schicht (11) mit einem Partikel-/Bindergemisch mit wärmeleitenden Partikeln (8), vorzugsweise aus expandiertem Grafit, Grafitpulver, BN, SiC oder AIN, aufweist und sich daran eine zweite Schicht (12) mit hochporösem Adsorbenspulver und einem Binder, z.B. auf der Basis von Alumosilikaten, anschließt.

8. Adsorberstruktur nach Anspruch 7,
die beinhaltet, dass die erste Schicht (11) mit der ersten Oberfläche (5) und die zweite Schicht (12) mit der zweiten Oberfläche (6) verbunden sind.

9. Adsorberstruktur nach einem der vorhergehenden Ansprüche,
die beinhaltet, dass die Fasern (2), die nach einem Pyrolyseprozess Dampfkanäle (3) hinterlassen, polymerbasierte Fasern aus Polyamid, Polyester oder Polyethylen sind.

10. Adsorberstruktur nach Anspruch 9,
die beinhaltet, dass die Fasern (2) aus Polystyrol, SAN, Polyamid (PA), insbesondere PA 66, Polycarbonat, Polyestercarbonat, aromatische Polyester (Polyarylate), Polyimide (PI), insbesondere Polyätherimid (PEI) oder modifiziertes Polymethacrylimid (Poly-(N-Methylmethacrylimid), PMMI), Polyoxymethylen (POM) und Polyterephthalat (PETP, PBTP) oder Copolymere der genannten Polymere oder Polyethylen, Polypropylen oder Phenolharz ausgebildet sind.

11. Adsorberstruktur nach einem der vorhergehenden Ansprüche,
die beinhaltet, dass die Fasern (2,14) deutlich kürzer sind als die Dicke der Adsorberstruktur (1).

12. Adsorptionswärmeübertrager (13), insbesondere eine Sorptionswärmepumpe oder eine Sorptionskälteanlage, mit einer Adsorberstruktur (1) nach einem der vorhergehenden Ansprüche, wobei die Adsorberstruktur (1) über als Wärmeleitfasern (14) ausgebildete Fasern (2) wärmeübertragend mit einem Wärmetauscherelement (10), insbesondere mit einer Wand der Sorptionswärmepumpe oder Sorptionskälteanlage verbunden ist.

13. Verfahren zur Herstellung einer Adsorberstruktur (1) nach einem der Ansprüche 1 bis 11, bei dem
- weitgehend in Gradientenrichtung (4) der späteren Adsorberstruktur (1) ausgerichtete Fasern (2,14) aus einem anorganischen wärmeleitenden und einem organischen pyrolysierbaren Material durch elektrostatisches Beflocken auf eine Klebeschicht (9) aufgebracht werden,
- zwischen den einzelnen Fasern (2) liegende Zwischenräume mit einem Gemisch aus Adsorbens- und Binderpartikel aufgefüllt werden,
- die pyrolysierbaren Fasern (2) durch einen Pyrolyseprozess in schlauchförmige Dampfkanäle (3) umgewandelt werden,
- die Adsorberstruktur (1) gesintert wird und dadurch eine gerichtete Transportstruktur (15) für den Wärmetransport und den Adsorptivdampftransport geschaffen wird.

14. Verfahren nach Anspruch 13,
bei dem die Zwischenräume in zwei Partikelschichten (11,12) unterschiedlicher Zusammensetzung ausgefüllt werden, nämlich mit einer erste Schicht (11) mit einem Partikel-/Bindergemisch mit hohen Anteilen wärmeleitender Partikel (8), vorzugsweise aus expandiertem Grafit, Grafitpulver BN, SiC oder AIN, und mit einer sich daran anschließenden zweiten Schicht (12) mit hochporösem Adsorbenspulver und einem Binder, insbesondere auf der Basis von Alumosilikaten.

15. Verfahren nach Anspruch 13 oder 14,
bei dem die Adsorberstruktur (1) verdichtet wird.

16. Verfahren zur Herstellung einer Adsorberstruktur (1) nach einem der Ansprüche 1 bis 11, bei dem die Adsorberstruktur (1) mittels Extrudieren hergestellt wird.

17. Verfahren nach Anspruch 16, bei dem die mittels Extrudieren hergestellte Adsorberstruktur (1) komprimiert wird, wodurch die durch organische und/oder anorganische Fasern (2,14) bzw. von ihnen nach einem Pyrolyseprozess hinterlassenen Dampfkanäle (3) hinsichtlich ihres Querschnitts reduziert werden.

## Claims

1. Adsorber structure (1) for an adsorption heat exchanger (13), wherein
- the adsorber structure (1) has directed transport structures (15) for transporting heat and for transporting adsorptive vapours, said transport structures being substantially aligned in a gradient direction (4),
- the transport structures (15) are formed by organic and inorganic fibres (2),
- vapour channels (3), in particular micro-vapour channels (3), for transporting matter, which have been left behind by the organic fibres (2) after a pyrolysis process, and
- the inorganic fibres (2) are designed as heat-conducting fibres (14) and are connected to a first surface (5) of the adsorber structure (1), whereas the vapour channels (3) are closed towards the first surface (5) and are largely open to the environment towards an opposing, second surface (6).

2. Adsorber structure according to claim 1, wherein the heat-conducting fibres (14) are made from PAN-based or pitch-based carbon fibres, metal fibres, inorganic fibres or whiskers.

3. Adsorber structure according to claim 1 or 2, wherein an adsorber material (7), in particular activated carbon, is arranged between the fibres (2) and the vapour channels (3).

4. Adsorber structure according to any of claims 1 to 3, wherein the fibres (2) are substantially perpendicularly incident on the first surface (5).

5. Adsorber structure according to any of the preceding claims, wherein the fibres (2) and the vapour channels (3) left behind by the fibres after a pyrolysis process extend predominantly parallel to one another.

6. Adsorber structure according to any of the preceding claims, wherein the fibres (2) and the vapour channels (3) left behind by the fibres after a pyrolysis process extend in a linear or meandering manner.

7. Adsorber structure according to any of claims 1 to 6, wherein the adsorber structure (1) comprises a first layer (11) with a particle/binder mixture containing heat-conducting particles (8), preferably of expanded graphite, graphite powder, BN, SiC or AIN, and an adjoining second layer (12) with highly-porous adsorbent powder and a binder, e.g. based on aluminosilicates.

8. Adsorber structure according to claim 7, wherein the first layer (11) is connected to the first surface (5) and the second layer (12) is connected to the second surface (6).

9. Adsorber structure according to any of the preceding claims, wherein the fibres (2) which leave behind vapour channels (3) after a pyrolysis process are polymer-based polyamide, polyester or polyethylene fibres.

10. Adsorber structure according to claim 9, wherein the fibres (2) are made from polystyrene, SAN, polyamide (PA), in particular PA 66, polycarbonate, polyester carbonate, aromatic polyesters (polyarylates), polyimides (PI), in particular polyether imide (PEI) or modified polymethacrylimide (poly-(N-methylmethacrylimide, PMMI), polyoxymethylene (POM) and polyterephthalate (PETP, PBTP), copolymers of said polymers or polyethylene, polypropylene, or phenolic resin.

11. Adsorber structure according to any of the preceding claims, wherein the fibres (2, 14) are significantly shorter than the thickness of the adsorber structure (1).

12. Adsorption heat exchanger (13), in particular a sorption heat pump or a sorption refrigeration plant, with an adsorber structure (1) according to any of the preceding claims, wherein the adsorber structure (1) is connected to a heat exchanger element (10), in particular to a wall of the sorption heat pump or sorption refrigeration plant, in a heat-conducting manner via fibres (2) designed as heat-conducting fibres (14).

13. Method for producing an adsorber structure (1) according to any of claims 1 to 11, wherein
- fibres (2, 14), which are made from an inorganic heat-conducting material and an organic pyrolysable material and are aligned predominantly in a gradient direction (4) of the subsequently produced adsorber structure (1), are applied to an adhesive layer (9) by electrostatic flocking,
- interstitial spaces between the individual fibres (2) are filled with a mixture of adsorbent and binder particles,
- the pyrolysable fibres (2) are converted into tubular vapour channels (3) by a pyrolysis process,
- the adsorber structure (1) is sintered, and a directed transport structure (15) is created thereby for transporting heat and for transporting adsorptive vapours.

14. Method according to claim 13, wherein the interstitial spaces in two particle layers (11, 12) of different compositions are filled, specifically with a first layer (11) having a particle/binder mixture with high proportions of heat-conducting particles (8), preferably of expanded graphite, graphite powder, BN, SiC or AIN, and with an adjoining second layer (12) having highly porous adsorbent powder and a binder, in particular based on aluminosilicates.

15. Method according to claim 13 or 14, wherein the adsorber structure (1).

16. Method for producing an adsorber structure (1) according to any of claims 1 to 11, wherein the adsorber structure (1) is produced by extrusion.

17. Method according to claim 16, wherein the adsorber structure (1) is compressed so that the vapour channels (3) created by organic and/or inorganic fibres (2, 14) or left behind by the fibres following a pyrolysis process are reduced in terms of cross-section.

## Revendications

1. Structure d'adsorption (1) pour un échangeur de chaleur à adsorption (13),
qui inclut :
- le fait que la structure d'adsorption (1) présente des structures de transport (15) dirigées pour un transport de chaleur et un transport de vapeur d'adsorption, qui sont orientées essentiellement dans la direction du gradient (4),
- le fait que les structures de transport (15) sont formées par des fibres organiques et inorganiques (2),
- le fait que des canaux de vapeur (3), en particulier des microcanaux de vapeur (3), sont présents pour un transport de matière, lesquelles ont laissé les fibres organiques (2) après un processus de pyrolyse, et
- le fait que les fibres inorganiques (2) sont réalisées comme des fibres conductrices de chaleur (14) et reliées à une première surface (5) de la structure d'adsorption (1), alors que les canaux de vapeur (3) sont fermés vers la première surface (5) et réalisés en grande partie ouverts vers une seconde surface (6) opposée à l'environnement.

2. Structure d'adsorption selon la revendication 1,
qui inclut le fait que
les fibres conductrices de chaleur (14) consistent en des fibres de carbone à base de PAN ou de brai, des fibres métalliques, des fibres inorganiques ou des trichites.

3. Structure d'adsorption selon la revendication 1 ou 2,
qui inclut le fait qu'
un matériau d'adsorption (7), en particulier du charbon actif, est agencé entre les fibres (2) et les canaux de vapeur (3).

4. Structure d'adsorption selon l'une quelconque des revendications 1 à 3,
qui inclut le fait que
les fibres (2) frappent la première surface (5) sensiblement perpendiculairement.

5. Structure d'adsorption selon l'une quelconque des revendications précédentes,
qui inclut le fait que
les fibres (2) ou les canaux de vapeur (3) laissés par celles-ci après un processus de pyrolyse sont en grande partie parallèles les uns par rapport aux autres.

6. Structure d'adsorption selon l'une quelconque des revendications précédentes,
qui inclut le fait que
les fibres (2) ou les canaux de vapeur (3) laissés par celles-ci après un processus de pyrolyse sont linéaires ou sinueux.

7. Structure d'adsorption selon l'une quelconque des revendications 1 à 6,
qui inclut le fait que
la structure d'adsorption (1) présente une première couche (11) avec un mélange particule/liant contenant des particules conductrices de chaleur (8), de préférence en graphite expansé, poudre de graphite, BN, SiC ou AIN, et se poursuit par une seconde couche (12) avec une poudre d'adsorption à haute porosité et un liant, par exemple à base d'alumosilicates.

8. Structure d'adsorption selon la revendication 7,
qui inclut le fait que
la première couche (11) est reliée à la première surface (5) et la seconde couche (12) à la seconde surface (6).

9. Structure d'adsorption selon l'une quelconque des revendications précédentes,
qui inclut le fait que
les fibres (2), qui laissent des canaux de vapeur (3) après un processus de pyrolyse, sont des fibres à base de polymère en polyamide, polyester ou polyéthylène.

10. Structure d'adsorption selon la revendication 9,
qui inclut le fait que
les fibres (2) sont réalisées à partir de polystyrène, SAN, polyamide (PA), notamment PA 66, polycarbonate, polyestercarbonate, polyesters aromatiques (polyarylates), polyimides (PI), notamment polyétherimide (PEI) ou polyméthacrylimide modifié (poly-(N-méthylméthacrylimide), PMMI), polyoxyméthylène (POM) et polytéréphtalate (PETP, PBTP) ou de copolymères desdits polymères ou polyéthylène, polypropylène ou résine phénolique.

11. Structure d'adsorption selon l'une quelconque des revendications précédentes,
qui inclut le fait que
les fibres (2, 14) sont nettement plus courtes que l'épaisseur de la structure d'adsorption (1).

12. Échangeur de chaleur à adsorption (13), en particulier une pompe à chaleur à sorption ou une installation de refroidissement à sorption, avec une structure d'adsorption (1) selon l'une quelconque des revendications précédentes, dans lequel la structure d'adsorption (1) est reliée de manière à transmettre la chaleur à un élément d'échangeur de chaleur (10), en particulier à une paroi de la pompe à chaleur à sorption ou de l'installation de refroidissement à sorption, par l'intermédiaire de fibres (2) réalisées des comme fibres conductrices de chaleur (14).

13. Procédé de fabrication d'une structure d'adsorption (1) selon l'une quelconque des revendications 1 à 11, dans lequel
- des fibres (2, 14) en un matériau inorganique conducteur de chaleur et en un matériau organique pyrolysable orientées en grande partie dans la direction du gradient (4) de la structure d'adsorption (1) ultérieure sont appliquées sur une couche adhésive (9) par flocage électrostatique,
- les interstices se trouvant entre les fibres (2) individuelles sont remplis d'un mélange de particules d'adsorbant et de liant,
- les fibres pyrolysables (2) sont converties en canaux de vapeur (3) en forme de tube par un processus de pyrolyse,
- la structure d'adsorption (1) est frittée et une structure de transport (15) dirigée pour le transport de chaleur et le transport de vapeur d'adsorption est ainsi créée.

14. Procédé selon la revendication 13,
dans lequel
les interstices sont remplis de deux couches de particules (11, 12) de composition différente, à savoir d'une première couche (11) avec un mélange particules/liant à forte proportion de particules conductrices de chaleur (8), de préférence en graphite expansé, en poudre de graphite BN, SiC ou AIN, et d'une seconde couche (12) suivant celle-ci avec une poudre d'adsorption très poreuse et un liant, en particulier à base d'aluminosilicates.

15. Procédé selon la revendication 13 ou 14,
dans lequel
la structure d'adsorption (1) est comprimée.

16. Procédé de fabrication d'une structure d'adsorption (1) selon l'une quelconque des revendications 1 à 11, dans lequel la structure d'adsorption (1) est fabriquée au moyen d'une extrusion.

17. Procédé selon la revendication 16,
dans lequel
la structure d'adsorption (1) fabriquée par extrusion est compressée, de sorte que les canaux de vapeur (3) laissés par les fibres organiques et/ou inorganiques (2, 14) ou par celles-ci après un processus de pyrolyse sont réduits en ce qui concerne leur section transversale.
